# EUROPÄISCHE PATENTSCHRIFT

(11) **EP 4 478 920 B1**
(45) Veröffentlichungstag und Bekanntmachung des Hinweises auf die Patenterteilung: **27.05.2026**
(21) Anmeldenummer: 23704949.9
(22) Anmeldetag: 10.02.2023
(51) Int. Cl.: A47J 37/06, F24C 15/20, A47J 37/07

(54) **TISCHGRILL UND FILTERGERÄT**
TABLE GRILL AND FILTER DEVICE
GRIL DE TABLE ET APPAREIL DE FILTRAGE

(30) Priorität: 15.02.2022 CH 1432022
(43) Veröffentlichungstag der Anmeldung: 25.12.2024
(73) Patentinhaber: Domo Vision AG, 4665 Oftringen (CH)
(72) Erfinder: FEIERABEND, Georg, 4663 Aarburg (CH)
(74) Vertreter: Frei Patent Attorneys
(86) Internationale Anmeldenummer: PCT/EP2023/053364
(87) Internationale Veröffentlichungsnummer: WO 2023/156304

(56) Entgegenhaltungen:
- EP-A1- 3 037 734
- WO-A1-2019/179115
- CN-A- 110 089 946
- CN-U- 205 402 972
- US-A1- 2006 191 895
- US-A1- 2010 051 010
- US-A1- 2021 310 665

## Beschreibung

Die Erfindung betrifft einen elektrischen Tischgrill.

Tischgrillgeräte sind dafür vorgesehen, während einer Mahlzeit auf dem Esstisch abgestellt zu werden, damit die Anwesenden ihre Speisen selbst zubereiten können. Die Geräte weisen zu diesem Zweck entsprechende Füsse auf, die ein Abstellen auf der Tischplatte ermöglichen, ohne dass diese bspw. durch übermässigen Wärmeeintrag in Mitleidenschaft gezogen würde.

Zu den Tischgrillgeräten gehören sowohl Geräte mit einer geheizten Grillplatte, auf denen die zuzubereitenden Speisen abgelegt werden, als auch Geräte vom Typ «Racletteofen», bei welcher die Speisen beispielsweise auf Pfännchen unter eine elektrische Heizung geschoben werden und von oben erhitzt werden. Von besonderem Interesse sind Racletteöfen mit Grillplatte, welche die beiden Funktionen kombiniert werden, indem unterhalb der Grillplatte und der darunter angebrachten elektrischen Heizung ein Einschub für die Pfännchen zum Zubereiten von Raclette zur Verfügung gestellt wird.

Ein hinlänglich bekanntes Problem bei der Zubereitung von Speisen ist die Geruchsentwicklung. Im Küchenbereich, wird dieses Problem durch Dampfabzugvorrichtungen angegangen. Auch ganz oder teilweise geschlossene Öfen mit Grillfunktion und mit Absaugvorrichtung, beispielsweise mit Filter sind bekannt, beispielsweise aus der EP 2 767 764. Für Tischgeräte sind solche Absaugvorrichtungen jedoch nicht im Einsatz, da Abzughauben, geschlossene Gehäuse oder Deckplatten, unter welchen die entstehenden Dämpfe abgesogen werden können, keine mit der Funktion der Geräte verträgliche Option darstellen.

US 2006/0191895, US 2021/0310665, WO 2019/179115 und CN110089946 zeigen je ein portables Grillgerät mit integrierter Absaugvorrichtung und Filter.

US2010/051010 zeigt ein Ventilationssystem für kommerzielle Kochsysteme, mit Tangentiallüfter.

CN205402972U zeigt einen Standalone-Luftreiniger mit Ionisierungsfunktion.

Es ist eine Aufgabe der vorliegenden Erfindung, eine Lösung zur Verfügung zu stellen, welcher Nachteile des Standes der Technik überwindet und welche das Problem der Geruchsentwicklung löst ohne die Funktionalität zu beeinträchtigen.

Gemäss einem ersten Aspekt der Erfindung wird ein elektrischer Tischgrill zur Verfügung gestellt. Dieser weist in an sich bekannter Art Abstellelemente, insbesondere Füsse, zum Abstellen auf einer Tischfläche sowie eine elektrische Heizung auf, zum Erwärmen von Speisen auf dem Esstisch. Er zeichnet sich ausserdem durch einen Lüfter, ein Filter und im Gerät vorhandene Ansaugöffnungen aus. Der Lüfter ist so angeordnet, dass er im Betrieb Luft durch die Ansaugöffnungen in einen Filterraum saugt und bewirkt, dass die Luft das Filter durchströmt und anschliessend durch mindestens eine Ausblasöffnung aus dem Filterraum hinaus gelangt.

Dabei kann der Lüfter in Strömungsrichtung vor oder nach dem Filter angeordnet sein. Eine Anordnung nach dem Filter bringt den Vorteil, dass der Lüfter weniger Verschmutzungen ausgesetzt ist.

Die Abstellelemente sind im Allgemeinen so ausgebildet, dass sie sich beim Betreib der elektrischen Heizung nicht wesentlich erwärmen.

Es ist eine Erkenntnis der Erfindung, dass ein System mit Ansaugöffnungen, Filter und Lüfter auch für Tischgrillgeräte sinnvoll ist, obwohl diese weder als geschlossener Ofen ausgebildet sind noch eine Abzughaube oder ähnlich aufweisen. Vielmehr zeigt sich durch Experimente bspw. mit sichtbarem Rauch, dass der von einem Lüfter erzeugbare Luftstrom vom Grillgut oder zu schmelzenden Käse weg durch ein Filter ausreichend ist, um mindestens einen wesentlichen Anteil der Geruchsentwicklung zu eliminieren. Dies gilt auch dann, wenn der Luftstrom weder nach oben führt (wie bei einer Abzughaube) noch in einem ganz oder teilweise geschlossenen Volumen einer Decke entlang geführt werden kann. Der durch einen Lüfter erzeugbare Luftstrom wirkt ausreichend der Tendenz entgegen, dass geruchsbelastete Gasgemische und Öltropfen aufgrund der Erwärmung nach oben steigen.

Das mindestens eine Filter kann insbesondere ein Aktivkohlefilter sein.

Besonders günstig ist es, wenn der Filterraum mit dem Lüfter im Innern des Tischgrills zentral angeordnet ist, so dass beidseitig des Filterraums Grillflächen und/oder Aufnahmen für Pfännchen vorhanden sind. Der Tischgrill wird also quasi durch den Filterraum in zwei Abschnitte (bspw. Hälften) geteilt, die jeweils Auflageplätze für Pfännchen und/oder eine Partie einer Grillplatte aufweisen. Die beiden Abschnitte des Tischgrill stellen sich für Benutzer als vorder- bzw. hinterseitiger Abschnitt dar, was aber nicht ausschliesst, dass wie an sich bekannt auch von den Seiten her zu bedienende Auflageplätze vorhanden sind. Insgesamt kann der Tischgrill einen ungefähr rechteckigen oder ellipsenförmigen Grundriss haben, wobei sich der Filterraum in etwa mittig entlang der längeren Achse erstrecken kann. Quadratische oder im Wesentlichen kreisförmige Grundrisse sind jedoch nicht ausgeschlossen.

Der Tischgrill kann also insbesondere so ausgebildet sein, dass er, wenn er auf einen Tisch gestellt wird, von mindestens zwei einander gegenüberliegenden Seiten zugänglich ist und von beiden Seiten her bedient werden kann, bspw. durch das Auflegen von Grillgut und/oder das Einschieben von Pfännchen, wobei sich der Filterraum zwischen den beiden Seiten befindet, beispielsweise mittig.

Als Alternative zu einer Anordnung des Filterraums in der Mitte kommt beispielsweise auch eine Ausführung in Frage, bei welcher der Filterraum seitlich angeordnet ist. Eine solche seitliche Anordnung kann insbesondere - aber nicht nur - bei kleineren Tischgrillgeräten mit nur 6 oder nur 4 oder weniger Plätzen eine gute Alternative sein.

Besonders günstig ist eine Anordnung, bei welcher der Lüfter ein Radiallüfter ist. Gemäss der hier verwendeten Terminologie gelten sogenannte Tangentiallüfter oder Querstromventilatoren als Radiallüfter. Tangentiallüfter saugen die Luft tangential an und geben sie tangential wieder ab und zeichnen sich oft durch eine im Verhältnis zum Umfang besonders lange Lüfterachse aus, wobei die Luft über im Wesentlichen die gesamte Länger der Achse angesaugt und ausgeblasen wird. Tangentiallüfter sind für sämtliche Aspekte der Erfindung eine besonders günstige Bauart des Radiallüfters.

Insbesondere kann die Drehachse des Radiallüfters (bspw. Tangentiallüfters) horizontal sein. Der Tischgrill definiert durch seine Ausgestaltung eine Vertikale und eine Horizontale, und er kann ausserdem - insbesondere durch einen im Wesentlichen rechteckigen oder elliptischen Grundriss wie vorstehend erwähnt - so ausgestaltet sein, dass in der horizontalen Ebene auch eine Longitudinale (Verbindung zwischen einander gegenüber sitzenden Benutzerinnen/Benutzern) und eine Transversale (der Senkrechten zur Transversalen) definiert sind, wobei die transversale Ausdehnung (Breite) des Tischgrills grösser ist als die longitudinale Ausdehnung (Tiefe). In einem solchen Fall kann es besonders günstig sein, wenn die Drehachse des Radiallüfters transversal liegt, also parallel zur Achse der grösseren Ausdehnung in der Horizontale. Insbesondere bei einer seitlichen Anordnung des Filterraums kann jedoch auch eine longitudinale Anordnung der Drehachse des Radiallüfters eine gute Option sein.

Die Verwendung eines Radiallüfters, insbesondere Tangentiallüfters, hat den Vorteil, dass der Lufttransport über eine vergleichsweise grosse Breite - entsprechend der axialen Ausdehnung des Radiallüfters - und daher eine weitgehend parallele Strömungsführung durch das Filter bzw. die Filter möglich ist. Diese Geometrie trägt dazu bei, den Strömungswiderstand zu vermindern, und dementsprechend die mögliche Lärmbelastung - zusätzlich zur im Allgemeinen ohnehin geringeren Geräuschentwicklung von Radiallüftern im Vergleich zu Axiallüftern.

Der Filterraum (und gegebenenfalls der Radiallüfter) kann/können sich über einen Grossteil der transversalen Breite des Tischgrills erstrecken, so dass sich die Ansaugöffnung bzw. Ansaugöffnungen auch zu den äusseren Auflageplätzen und/oder auch zum Randbereich der Grillplatte hin erstreckt bzw. erstrecken. Somit ist und kein wesentlicher Transport der Luft in transversale Richtungen nötig. «Über einen Grossteil der Breite kann bspw. bei einer Ausgestaltung mit Auflageplätzen für Pfännchen bedeuten, dass sich der Filterraum so weit erstreckt, dass er bis auf höchstens eine halbe Breite eines Auflageplatzes von den äusseren Rändern der Auflage (die durch die Auflageplätze gebildet wird) hin erstreckt.

Oft ist ein Tischgrill so ausgebildet, dass Platz für die gleichzeitige Bedienung durch eine Mehrzahl von Personen vorhanden ist; insbesondere können bei einem im Wesentlichen rechteckigen oder ellipsenförmigen Grundriss gegebenenfalls Auflageplätzen in zwei einander gegenüberliegende Reihen von Pfännchen vorhanden sein. Die Ansaugöffnungen sind dann beispielsweise zwischen den Reihen angeordnet. Es kann insbesondere beidseitig, d.h. zu beiden Reihen hin, je mindestens eine Ansaugöffnung oder eine Reihe von mehreren Ansaugöffnungen vorhanden sein.

Die Ansaugöffnung(en) oder mindestens einige der Ansaugöffnungen können in einer vertikalen Wand des Gehäuses ausgebildet sein, die zwischen den Reihen von Auflageplätzen bzw. zwischen den Partien der Grillplatte verläuft. Anstatt dass eine Reihe von Ansaugöffnungen gebildet wird, kann auch ein länglicher Ansaugschlitz vorhanden sein, bspw. beidseitig je ein solcher Ansaugschlitz.

Der Tischgrill ist als Kombinationsgerät ausgebildet, indem sowohl eine Grillplatte als auch ein Aufnahmeraum für Pfännchen vorhanden ist, wobei im Allgemeinen nur eine einzige elektrische Heizung benötigt wird, die unmittelbar unterhalb der Grillplatte und oberhalb eines Aufnahmeraums mit den Auflageplätzen für die Pfannen angeordnet ist.

Der Tischgrill weist mindestens eine obere Ansaugöffnung und mindestens eine untere Ansaugöffnung auf, wobei die oberen Ansaugöffnung zum Raum oberhalb der Grillplatte hin offen ist und die - im allgemeinen mehreren - unteren Ansaugöffnungen zum Aufnahmeraum hin.

Der Tischgrill kann insbesondere eine transversale Leiste aufweisen, welche zwischen den Partien der Grillplatte verläuft und in welcher die obere(n) Ansaugöffnung(en) vorhanden ist/sind. Eine solche Leiste verhindert, dass versehentlich Grillgut auf die Ansaugöffnungen gelegt werden kann. Die oberen Ansaugöffnungen können beidseitig je an einer vertikalen, durch die Leiste gebildeten Wand vorhanden sein.

Untere Ansaugöffnungen können an einer vertikalen Wand ausgebildet sein. Sie können bspw. oberseitig des Aufnahmeraums, unterhalb der elektrischen Heizung vorhanden sein.

Die Ansaugöffnung(en) kann/ können verschliessbar und/oder verstellbar sein. Wenn obere und untere Ansaugöffnungen vorhanden sind, können diese unabhängig voneinander verschliessbar bzw. verstellbar sein. In einem Beispiel weist der Tischgrill einen oder mehrere Schieber auf, durch deren Bewegung die Ansaugöffnungen geöffnet bzw. geschlossen werden können. Ein solcher Schieber kann bspw. in einfacher Art mit Löchern versehen sein, deren Grösse mindestens der Grösse der Ansaugöffnungen entspricht und die durch Verschieben des Schiebers von einer Lage, in welcher sie mit den Ansaugöffnungen fluchten in eine Lage, in welcher das nicht der Fall ist und der Schieber die Ansaugöffnungen verschliesst, gebracht werden.

Weiter beschreibt der vorliegende Text ein nicht beanspruchtes Filtergerät, welches vom Tischgrill unabhängig ist und bspw. neben einen konventionellen Tischgrill ohne Lüfter gestellt werden kann. Dieses ist wie der Tischgrill dafür vorgesehen, auf eine Tischfläche eines gedeckten Tischs gestellt zu werden. Es weist ein Gehäuse mit Ansaugöffnungen und mindestens einer Austrittsöffnung auf. Das Gerät hat eine insgesamt längliche Quaderform, wobei die Länge deutlich (bspw. um mindestens einen Faktor 1.8, insbesondere mindestens einen Faktor 2, bspw. einen Faktor 2.5 oder mehr) grösser ist als die Breite und die Höhe. Im Innern des Gehäuses ist ein Tangentiallüfter angeordnet. Die Drehachse des Tangentiallüfters ist parallel zur Längsachse des Filtergeräts. Entlang des Tangentiallüfters erstreckt sich ein ebenfalls in Längsrichtung ausgedehnter Filterraum mit mindestens einem Aktivkohlefilter. Der Tangentiallüfter bewirkt das Ansaugen von Luft durch die Ansaugöffnungen, das anschliessende Durchströmen des Filters bzw. der Filter und das Ausblasen durch die Austrittsöffnung(en).

Die insgesamt längliche Form ist im Zusammenhang mit der Verwendung des Radiallüfters besonders vorteilhaft, ermöglicht sie doch ein bedarfsgerechtes Aufstellen auf dem Tisch, wobei eine vertikale Anordnung (Längsausdehnung und Lüfterachse sind vertikal) besonders platzsparend ist. Auch wenn die benötigte Leistung des Lüfters etwas grösser ist als beim Vorgehen gemäss dem ersten Aspekt, da die Ansaugöffnungen nicht so nahe beim Grill- bzw. Gargut sein kann, sorgt die längliche Ausgestaltung mit Radiallüfter doch dafür, dass über einen breiten Bereich relativ effizient Luft angesaugt und gereinigt werden kann.

Im Folgenden wird der Erfindungsgegenstand anhand von Ausführungsbeispielen und den beiliegenden Zeichnungen näher erläutert. In den Zeichnungen bezeichnen gleiche Bezugszeichen gleiche oder analoge Elemente. Es zeigen:
- Fig. 1: eine Ansicht eines Tischgrills;
- Fig 2 und 3: eine Ansicht des Tischgrills von Fig. 2 von der Bedienseite her respektive von oben;
- Fig. 4: eine Schnittdarstellung des Tischgrills (Schnitt entlang der Ebene IV-IV in Fig. 3);
- Fig. 5: eine Ansicht eines nicht beanspruchten Filtergeräts; und
- Fig. 6: eine Schnittdarstellung des Filtergeräts von Fig. 5.

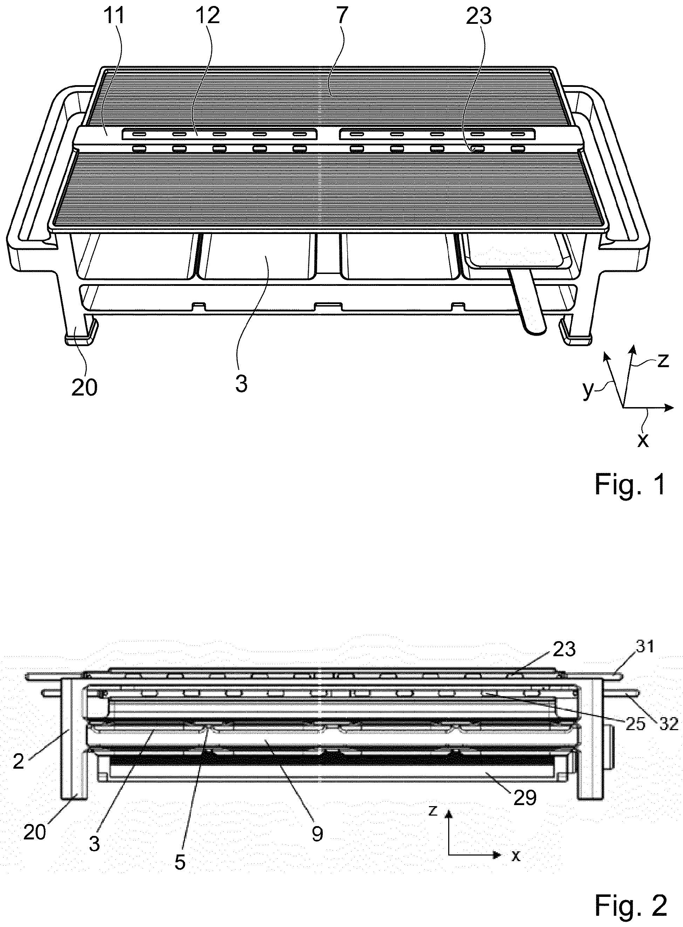

### Figuren 1 bis 3 zeigen einen Tischgrill 1 der Art «Racletteofen mit Grillplatte».

Der Tischgrill 1 weist ein Gestell mit vier Säulen 2 auf, die unterseitig je einen Fuss 20 ausbilden. Er weist eine elektrische Heizung in Form eines Heizstabs oder einer Heizschlange oder dergleichen auf. Unterhalb der elektrischen Heizung sind Auflageplätze 3 für Pfännchen vorhanden. Zwischen den Auflageplätzen 3 sind Positionierhilfen 5 angeordnet, deren Abstand und Verlauf auf die Dimensionierung der Pfännchen abgestimmt sind. Die Grillplatte 7 kann in an sich bekannter Art gerippt sein oder eine sonstige für die Grillfunktion optimierte Oberflächengestalt aufweisen. Unterhalb der Auflageplätze 3 für die Pfännchen ist eine optionale nicht geheizte Abstellfläche 9 ausgebildet, auf welcher gerade nicht verwendete Pfännchen abgestellt werden können ohne sich zu erhitzen.

Der Tischgrill hat eine insgesamt ungefähr rechteckige Grundrissform, so dass zwei einander gegenüberliegende Reihen von Auflageplätzen 3, im gezeichneten Ausführungsbeispiel je vier Auflageplätzen, vorhanden sind. Auch die Grillplatte ist, durch eine Leiste 11 getrennt, in zwei Hälften aufgeteilt, wovon aus Sicht der Benutzer jeweils eine die vordere Hälfte und die andere die hintere Hälfte ist.

Fig. 1-3 zeigen auch ein kartesisches Koordinatensystem, wobei die z-Achse der Vertikalen entspricht und die x-Achse der Transversalen, d.h. die Auflageplätze 3 für die Pfännchen liegen in x-Richtung nebeneinander aufgereiht. Die Pfännchen werden in y-Richtung oder -y-Richtung eingeschoben und rausgezogen, weshalb y- oder minus-y-Richtungen in vorliegenden Text auch «longitudinale Richtungen» genannt werden.

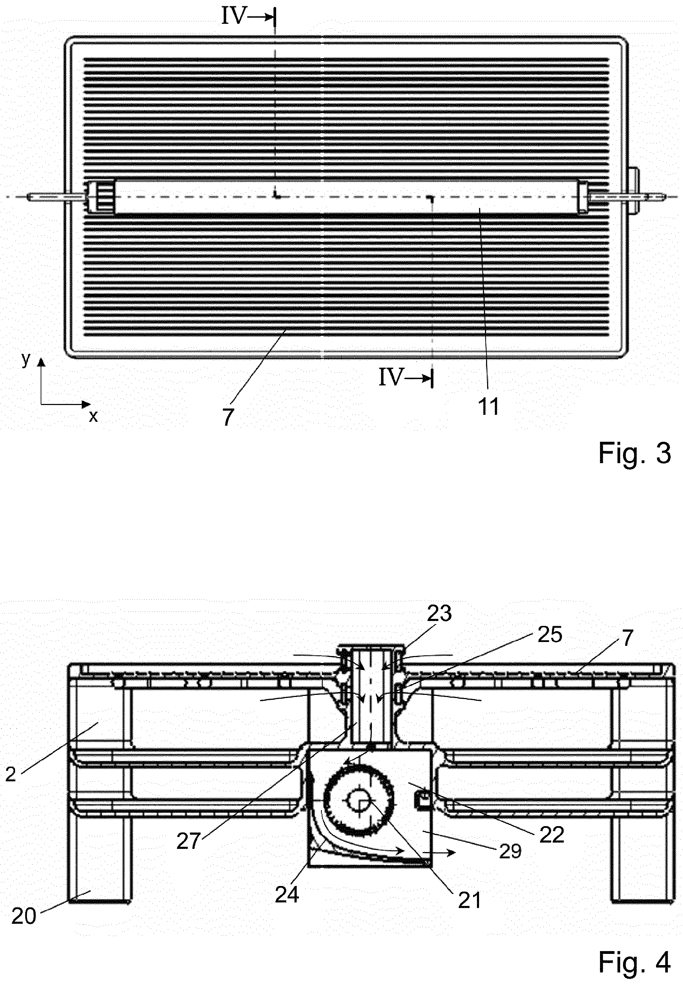

Wie man insbesondere auch in **Figur 4** sieht, weist der Tischgrill ein Luftabsaugsystem auf. Dieses ist im Innern des Tischgrills, zwischen den einander gegenüberliegenden Reihen von Auflageplätzen 3 angeordnet. Es umfasst einen Lüfter 21, nämlich einen Radiallüfter der Bauart «Tangentiallüfter», dessen Drehachse parallel zur transversalen Richtung (x-Richtung) angeordnet ist, und der sich über einen Grossteil der Breite (transversalen Ausdehnung) des Tischgrills erstreckt. Der Lüfter saugt Luft tangential durch obere Ansaugöffnungen 23, die beidseitig an der Leiste vorhanden sind und/oder durch untere Ansaugöffnungen 25, die unterhalb der Grillplatte angeordnet sind, an, führt sie durch einen Filterraum 27 mit mindestens einem Aktivkohlefilter und bläst sie durch eine Ausblasöffnung 29 gefiltert nach draussen. Die Strömungsrichtung der Luft ist in Fig. 4 mit Pfeilen illustriert. Im Innern eines den Lüfter 21 enthaltenden Lüfterraums 22 und gegebenenfalls auch anderswo im Bereich des zu erzeugenden Luftstroms, bspw. im Filterraum, kann ein Strömungslenkelement 24 oder können mehrere Strömungslenkelemente die Wirkung des Lüfters 21 unterstützen.

Der Lüfter ist elektrisch angetrieben und weist zu diesem Zweck einen Elektromotor auf. Der Tischgrill kann so eingerichtet sein, dass der Lüfter ständig in Betrieb ist, wenn der Tischgrill am Stromnetz angeschlossen ist oder wenn ein Hauptschalter eingeschaltet ist. Er kann aber optional auch durch einen Benutzer ein- und ausschaltbar sein; auch unterschiedliche Lüftergeschwindigkeiten sind möglich; eventuell können solche auch abhängig vom Zustand der Schieberelemente oder ähnlich (nachstehend beschrieben) sein, welche die Ansaugöffnungen öffnen oder schliessen. Zu diesem Zweck kann der Zustand der Schieber (oder anderen Elemente, mit denen man die Ansaugöffnungen öffnen oder schliessen kann) durch einen Schalter oder Sensor abgefragt werden.

In Fig. 1 sieht man noch an der Leiste 11 zwei oberseitige verschliessbare, und im Gebrauch verschlossene Wartungsschlitze 12.

Die oberen Ansaugöffnungen 23 und die unteren Ansaugöffnungen 25 sind verschliessbar, und zwar unabhängig voneinander (d.h. die oberen Ansaugöffnungen 23 können geöffnet oder verschlossen werden unabhängig davon, ob die unteren Ansaugöffnungen 25 offen oder geschlossen sind, und umgekehrt). Im dargestellten Ausführungsbeispiel ist das durch je ein oberseitiges Schieberelement 31 für die oberen Ansaugöffnungen 23 und ein unterseitiges Schieberelement 32 für die unteren Ansaugöffnungen realisiert.

Die Grösse des Tischgrills 1 ist darauf ausgerichtet, dass der Tischgrill dafür gemacht ist, auf einem gedeckten Tisch platziert zu werden und eine Mahlzeit zu begleiten. Die Breite (transversale Ausdehnung) beträgt üblicherweise zwischen 40 cm und 70 cm, die Tiefe (longitudinale Ausdehnung), im Allgemeinen zwischen 20 cm und 40 cm, die Höhe zwischen 8 cm und 25 cm.

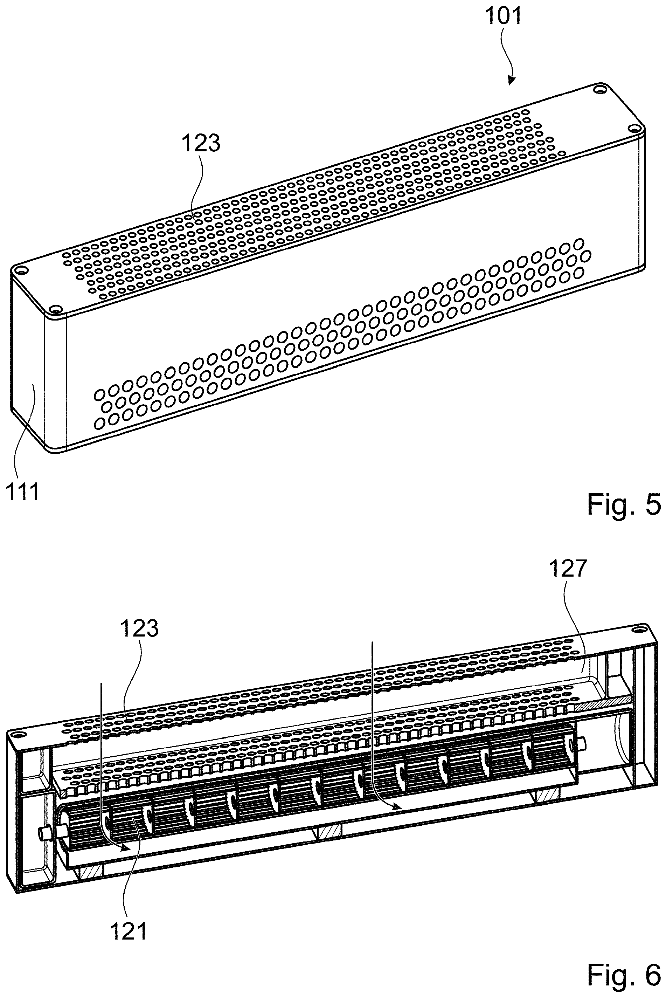

Ein nicht beanspruchtes Filtergerät 101 sieht man in **Figuren 5 und 6****.** Das Gerät weist ein Gehäuse 111 mit Ansaugöffnungen 123 und Austrittsöffnungen (in Fig. 5 und 6 nicht sichtbar) auf. Das Gerät hat eine insgesamt längliche Quaderform, wobei die Länge deutlich grösser ist als die Breite und die Höhe. Im Innern des Gehäuses 111 ist ein Lüfter, und zwar ein Radiallüfter der Bauart «Tangentiallüfter» 121 angeordnet. Der Tangentiallüfter ist entlang der Längenausdehnung des Gehäuses 111 ausgerichtet, d.h. die Drehachse des Tangentiallüfters ist parallel zur Längsachse des Filtergeräts. Entlang des Tangentiallüfters erstreckt sich ein ebenfalls in Längsrichtung ausgedehnter Filterraum 127 mit mindestens einem Aktivkohlefilter. Der Tangentiallüfter bewirkt das Ansaugen von Luft durch die Ansaugöffnungen 123, das anschliessende Durchströmen des bzw. der Filter und das Ausblasen durch die Austrittsöffnungen.

## Patentansprüche

1. Elektrischer Tischgrill mit einem Gehäuse mit Abstellelementen zum Abstellen des Tischgrills auf einer Tischfläche und mit einer elektrischen Heizung, einem elektrisch antreibbaren Lüfter (21) sowie mindestens einem Filter wobei das Gehäuse einen Filterraum sowie mindestens eine Ansaugöffnung (23, 25) ausbildet, wobei das mindestens eine Filter im Filterraum (27) angeordnet ist, und der Lüfter so angeordnet ist, dass in einem Betriebszustand Luft durch die mindestens eine Ansaugöffnung angesaugt und von dort in den Filterraum und durch das mindestens eine Filter aus dem Filterraum hinaus gefördert wird, ferner beinhaltend eine Grillplatte (7) oberhalb der elektrischen Heizung und einen Aufnahmeraum für Pfännchen unterhalb der Grillplatte (7), **gekennzeichnet durch** je mindestens eine obere Ansaugöffnung (23) und eine untere Ansaugöffnung (25), wobei die obere Ansaugöffnung zu einem Raum oberhalb der Grillplatte (7) hin offen ist und die untere Ansaugöffnung (25) zum Aufnahmeraum hin offen ist.

2. Tischgrill nach Anspruch 1, wobei der Filterraum im Tischgrill zentral angeordnet ist, so dass beidseitig der Ansaugöffnung beziehungsweise Ansaugöffnungen Auflageplätze für Pfännchen und/oder Partien einer Grillplatte vorhanden sind.

3. Tischgrill nach Anspruch 2, wobei zu beiden Seiten hin je mindestens eine Ansaugöffnung vorhanden ist.

4. Tischgrill nach Anspruch 2 oder 3, aufweisend eine oberseitige transversale Leiste (11), zu deren beiden Seiten sich je eine Partie einer Grillplatte (7) erstreckt, wobei die Ansaugöffnung beziehungsweise mindestens eine der Ansaugöffnungen (23) an der transversalen Leiste vorhanden ist.

5. Tischgrill nach einem der vorangehenden Ansprüche, aufweisend einen rechteckigen oder ellipsenförmigen Grundriss, wobei sich der Filterraum im Tischgrill transversal, entlang einer Hauptachse erstreckt.

6. Tischgrill nach einem der vorangehenden Ansprüche, wobei der Lüfter ein Tangentiallüfter ist.

7. Tischgrill nach Anspruch 6, aufweisend einen rechteckigen oder ellipsenförmigen Grundriss wobei eine Drehachse des Tangentiallüfters horizontal und parallel zur Dimension der grössten horizontalen Ausdehnung ist.

8. Tischgrill nach einem der vorangehenden Ansprüche, wobei die mindestens eine Ansaugöffnung (23, 25) verschliessbar ist und/oder einen verstellbaren Querschnitt aufweist.

## Claims

1. Electric tabletop grill comprising a housing with support elements for placing the tabletop grill on a table surface, and comprising an electric heater, an electrically drivable fan (21), and at least one filter, wherein the housing forms a filter chamber and at least one intake opening (23, 25), wherein the at least one filter is arranged in the filter chamber (27), and the fan is arranged such that, in an operating state, air is drawn in through the at least one intake opening and conveyed from there into the filter chamber and through the at least one filter out of the filter chamber, further comprising a grill plate (7) above the electric heater and a receiving space for pans below the grill plate (7), **characterized by** at least one upper intake opening (23) and at least one lower intake opening (25), wherein the upper intake opening is open toward a space above the grill plate (7) and the lower intake opening (25) is open toward the receiving space.

2. Tabletop grill according to claim 1, wherein the filter chamber is arranged centrally in the tabletop grill such that, on both sides of the intake opening or intake openings, support areas for pans and/or portions of a grill plate are provided.

3. Tabletop grill according to claim 2, wherein at least one intake opening is provided on each of both sides.

4. Tabletop grill according to claim 2 or 3, comprising an upper transverse bar (11), on both sides of which a portion of a grill plate (7) extends, wherein the intake opening or at least one of the intake openings (23) is provided on the transverse bar.

5. Tabletop grill according to one of the preceding claims, comprising a rectangular or elliptical floor plan, wherein the filter chamber extends transversely in the tabletop grill along a main axis.

6. Tabletop grill according to one of the preceding claims, wherein the fan is a crossflow fan.

7. Tabletop grill according to claim 6, comprising a rectangular or elliptical floor plan, wherein an axis of rotation of the crossflow fan is horizontal and parallel to the dimension of the greatest horizontal extent.

8. Tabletop grill according to one of the preceding claims, wherein the at least one intake opening (23, 25) is closable and/or has an adjustable cross-section.

## Revendications

1. Gril de table électrique comprenant un boîtier avec des éléments de support destinés à poser le gril de table sur une surface de table, et comprenant un dispositif de chauffage électrique, un ventilateur (21) entraîné électriquement ainsi qu'au moins un filtre, le boîtier formant une chambre de filtration ainsi qu'au moins une ouverture d'aspiration (23, 25), ledit au moins un filtre étant disposé dans la chambre de filtration (27), et le ventilateur étant agencé de telle sorte que, dans un état de fonctionnement, de l'air est aspiré à travers ladite au moins une ouverture d'aspiration et est acheminé de là dans la chambre de filtration et à travers ledit au moins un filtre hors de la chambre de filtration, comprenant en outre une plaque de cuisson (7) au-dessus du dispositif de chauffage électrique et un logement pour des coupelles en dessous de la plaque de cuisson (7), **caractérisé par** au moins une ouverture d'aspiration supérieure (23) et au moins une ouverture d'aspiration inférieure (25), l'ouverture d'aspiration supérieure étant ouverte vers un espace au-dessus de la plaque de cuisson (7) et l'ouverture d'aspiration inférieure (25) étant ouverte vers ledit logement.

2. Gril de table selon la revendication 1, dans lequel la chambre de filtration est disposée centralement dans le gril de table, de sorte que, de part et d'autre de l'ouverture ou des ouvertures d'aspiration, sont prévus des emplacements de support pour des coupelles et/ou des parties d'une plaque de cuisson.

3. Gril de table selon la revendication 2, dans lequel au moins une ouverture d'aspiration est prévue de chaque côté.

4. Gril de table selon la revendication 2 ou 3, comprenant une barre transversale supérieure (11), de part et d'autre de laquelle s'étend respectivement une partie d'une plaque de cuisson (7), l'ouverture d'aspiration ou au moins l'une des ouvertures d'aspiration (23) étant prévue au niveau de la barre transversale.

5. Gril de table selon l'une des revendications précédentes, présentant un plan rectangulaire ou elliptique, la chambre de filtration s'étendant transversalement dans le gril de table le long d'un axe principal.

6. Gril de table selon l'une des revendications précédentes, dans lequel le ventilateur est un ventilateur tangentiel.

7. Gril de table selon la revendication 6, présentant un plan rectangulaire ou elliptique, dans lequel un axe de rotation du ventilateur tangentiel est horizontal et parallèle à la dimension de plus grande extension horizontale.

8. Gril de table selon l'une des revendications précédentes, dans lequel ladite au moins une ouverture d'aspiration (23, 25) est obturable et/ou présente une section transversale réglable.
